# EUROPÄISCHE PATENTSCHRIFT

(11) **EP 1 075 786 B1**
(45) Veröffentlichungstag und Bekanntmachung des Hinweises auf die Patenterteilung: **06.09.2006**
(21) Anmeldenummer: 00115957.3
(22) Anmeldetag: 26.07.2000
(51) Int. Cl.: A01B 63/111

(54) **Landwirtschaftliches Arbeitsgerät**
Agricultural implement
Outil agricole

(30) Priorität: 10.08.1999 US 370844
(43) Veröffentlichungstag der Anmeldung: 14.02.2001
(73) Patentinhaber: DEERE & COMPANY, Moline, Illinois 61265-8098 (US)
(72) Erfinder: Noonan, James Thomas, Johnston, IA 50131 (US); Parker, Paul David, Ottumwa, IA 52501 (US)
(74) Vertreter: Holst, Sönke

(56) Entgegenhaltungen:
- EP-A- 0 533 571
- EP-A- 0 763 315
- EP-A- 0 916 244
- US-A- 3 844 357
- US-A- 5 152 347

## Beschreibung

Die Erfindung betrifft ein landwirtschaftliches Arbeitsgerät mit einem Rahmen, an dem Bodenbearbeitungswerkzeuge anbringbar sind, und der eingerichtet ist, mittels eines Fahrzeugs über den Boden bewegt zu werden, wobei der Rahmen durch wenigstens eine Hubeinrichtung abgestützt ist, um den Rahmen relativ zum Boden anzuheben und abzusenken.

Bei den meisten erhältlichen, mehrere Rahmen aufweisenden Arbeitsgeräten, wie beispielsweise Feldgrubbern oder Meißelpflügen, werden Hydraulikzylindersysteme zur Bereitstellung einer Tiefensteuerung beim Feldarbeitsbetrieb und hinreichender Bodenfreiheit während des Transports verwendet. Einige Tiefensteuerungssysteme, wie sie z. B. in der US 3 663 032 A gezeigt werden, verwenden in Serie geschaltete, miteinander im Einklang arbeitende Zylinder, um die Rahmenteile übereinstimmend anzuheben oder abzusenken. Andere Systeme beruhen auf mechanischen Tiefenanschlägen, um die Betriebshöhe zu steuern, erlauben dem Bediener jedoch nicht, diese Höhe von der Kabine aus zu ändern, oder die Tiefe auf einfache Weise entsprechend unterschiedlichen Transportbedingungen, Bodenkonturen und Bodenbedingungen zu ändern. Außerdem erfordern sowohl die in Serie geschalteten Zylinder und die mechanischen Tiefenanschläge eine außerhalb der Kabine vorzunehmende mechanische Einstellung, um die Höhe von Flügelrahmen relativ zum Haupt- oder Zentralrahmen einzustellen. Eine entsprechende Steuerung der Höhe beim Nivellieren des Rahmens in Vorwärts/Rückwärtsrichtung oder der Neigung und beim Nivellieren in seitlicher Richtung ist mit den geschilderten Problemen verbunden.

In der auf dieselbe Anmelderin zurückgehenden EP 916 244 A wird ein verbessertes Hub- und Tiefensteuerungssystem beschrieben, das eine Vielzahl elektrohydraulisch gesteuerter Zylinder umfasst, die an einem Werkzeugrahmen voneinander beabstandet und mit einer Rahmenaufhängungsstruktur verbunden sind, wie Heberadzusammenbauten. Eine Gerätesteuereinheit in der Kabine des ziehenden Fahrzeugs ist mit Rückkopplungspotentiometern oder anderen Umsetzern verbunden, die Signale bereitstellen, die dem Kolbenhub eines Zylinders oder der Position der Aufhängung entsprechen. Die Rückkopplungssignale werden in der Gerätesteuereinheit mit einem Steuersignal verglichen, das durch Drehung eines Hebels oder Knopfes an einer Bedienersteuereinheit in der Kabine erzeugt wird. Abhängig von der Position des Zylinders relativ zur vom Bediener ausgewählten Position stellt die Gerätesteuereinheit ein Ausgangssignal für das elektrohydraulische Ventil bereit, um einen proportionalen Betrag an Fluss für die gewünschte Zylinderposition zu erreichen. Die Gerätesteuereinheit vergleicht auch Rückkopplungssignale von den Umsetzern und stellt die an jedes der Ventile abgegebene Ausgangsspannung ein, so dass der Rahmen gleichmäßig angehoben und abgesenkt werden kann. Bei Bedingungen, in denen eine unabhängige Einstellung von unterschiedlichen Rahmenabschnitten gewünscht wird, kann die Bedienersteuereinheit derart eingestellt werden, dass sie das erforderliche unterschiedliche Signal für jeden Abschnitt bereitstellt. Das Hubsystem stellt gleichmäßige Tiefensteuerung und Höhenausgleich bereit, sogar mit unähnlichen Zylindern mit unterschiedlichen Kapazitäten und Kolbenhublängen. Die Nivellierung und Tiefensteuerung können sowohl in Fahrtrichtung als auch in der Querrichtung erreicht werden. Es ist auch ein Bedienelement zur Auswahl einer Zwischentiefe vorhanden, mit der eine Höhe der Arbeitselemente auswählbar ist, die zwischen einer Arbeitstiefe und einer zum Transport angehobenen Position liegt. Die Ansteuerung der Zylinder erfolgt unabhängig von der ausgewählten Betriebsart durch die Gerätesteuereinheit und das elektrohydraulische Ventil.

Die EP 0 763 315 A beschreibt eine andere Tiefensteuerung für ein landwirtschaftliches Bodenbearbeitungsgerät, bei dem eine elektronische Steuerung über elektrohydraulische Ventile Zylinder ansteuert, die wiederum eine Höhenkontrolle des Bodenbearbeitungsgeräts bewirken. Auch hier sind unterschiedliche Betriebsarten der Steuerung möglich, bei denen der Bediener die Höhe am vorderen und hinteren Ende des Bodenbearbeitungsgeräts synchron oder getrennt vorgeben kann. Die Ansteuerung der Zylinder erfolgt ebenfalls unabhängig von der ausgewählten Betriebsart durch die Gerätesteuereinheit und das elektrohydraulische Ventil.

Das der Erfindung zugrunde liegende Problem wird darin gesehen, dass es bei einem Arbeitsgerät, welches elektronische Steuerungen verwendet, nicht möglich ist, den Betrieb fortzusetzen oder das Arbeitsgerät zum Transport anzuheben, ohne eine zeitaufwändige Reparatur oder ein extensives Abdichten hydraulischer Schläuche durchzuführen, wenn ein Fehler in der Elektronik, der Verkabelung oder den elektrohydraulischen Ventilen auftritt. Es ist wünschenswert, einen einfachen Aufbau des Höhensteuerungssystems und ein unkompliziertes, effizientes Verfahren für einen fortgesetzten Betrieb des Arbeitsgeräts im Falle eines derartigen Fehlers zu haben.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Hub- und Tiefensteuerungssystem mit einem elektrohydraulisch gesteuerten Hydraulikzylinder oder einer Vielzahl derartiger Hydraulikzylinder zum Anheben des Rahmens eines landwirtschaftlichen Arbeitsgeräts wird gemäß der vorliegenden Erfindung mit einer Umgehungseinrichtung ausgestattet, um im Falle eines Fehlers in der elektronischen Steuereinheit oder der Verdrahtung die Fortsetzung des Betriebs des Arbeitsgeräts zu erleichtern. Das Höhensteuerungssystem umfasst elektronisch gesteuerte Steuerventile für die Hydraulikzylinder, die normalerweise durch die elektronische Steuereinheit gesteuert werden. Wenn die automatische Steuerung im Fehlerfall umgangen wird, können die Hydraulikzylinder durch Ringelemente ("Donuts") oder andere mechanische Einrichtungen, die am Arbeitsgerät vorgesehen sind, auf die gewünschte Länge eingestellt werden, um eine konventionelle Tiefensteuerung durchzuführen. Der Bediener aktiviert einfach eine manuelle Steuerung an jedem Steuerventil, die das Ventil in der geöffneten Stellung arretiert.

Auf diese Weise erreicht man, dass ein Fehler der Elektronik, Verdrahtung oder der Steuerventile nicht sofort die Feldarbeit unterbrechen muss, um eine Reparatur durchzuführen. Man erhält ein einfach aufgebautes Höhensteuerungssystem, das unproblematisch in einen manuell gesteuerten Modus versetzt werden kann, wenn die elektronische Steuereinheit versagt.

Die Steuereinheit kann mit einem Umsetzer zur Erfassung der Position der Hydraulikzylinder ausgestattet sein. Es wird auf diese Weise eine Rückkopplung einer Information über die Länge, auf die die Kolben der Hydraulikzylinder ausgefahren sind, an die Steuereinheit bereitgestellt.

Die elektronisch gesteuerten Steuerventile sind vorzugsweise elektrohydraulische Ventile, die manuell in einer geöffneten Stellung arretierbar sind, wenn ein Fehler im Schaltkreis der Steuereinheit auftritt. Insbesondere finden Proportionalventile Verwendung, die einen von den Ausgangssignalen der Umsetzer abhängigen Fluss ermöglichen.

Bei manuell geöffnetem Steuerventil kann der Bediener das Arbeitsgerät mit dem Auswahlsteuerventil des Traktors weiter betreiben und steuern. Die Höhensteuerung bleibt somit durch Benutzung des Auswahlsteuerventils im Umgehungsmodus auch im Fall eines Fehlers der elektronischen Steuereinheit funktionsfähig.

Bei Systemen mit einer zusätzlichen, elektrohydraulischen Geräteventileinrichtung, die von einer Gerätesteuereinheit gesteuert werden, können Hydraulikschläuche mit Schnellkupplungen, die sowohl mit den Kupplungen des Auswahlsteuerventil des Traktors als auch mit der zusätzlichen Geräteventileinrichtung koppelbar sind, leicht an die Kupplungen des Auswahlsteuerventils des Traktors umgekoppelt werden, so dass die Hydraulikzylinder durch das Auswahlsteuerventil steuerbar sind, wenn die Steuerventile der Hydraulikzylinder in der geöffneten Position verrastet sind.

Das Steuerventil kann durch eine Spule elektromagnetisch gesteuert werden. Die Spule (oder ein von ihr bewegter Kern) kann im Umgehungsmodus manuell in der Position arretiert werden, in der das Steuerventil vollständig geöffnet ist.

In den Zeichnungen ist ein nachfolgend näher beschriebenes Ausführungsbeispiel der Erfindung dargestellt. Es zeigt:
- Fig. 1: eine schematische Darstellung eines elektronisch gesteuerten Hub- und Tiefensteuerungssystems an einem landwirtschaftlichen Arbeitsgerät;
- Fig. 2: eine schematische Darstellung eines Ventils mit einer manuell betätigten Umgehungseinrichtung, die im System der Figur 1 verwendet wird, und
- Fig. 3: eine Seitenansicht eines elektrohydraulischen Ventils mit einem manuell betätigten Riegel für die Umgehungseinrichtung.

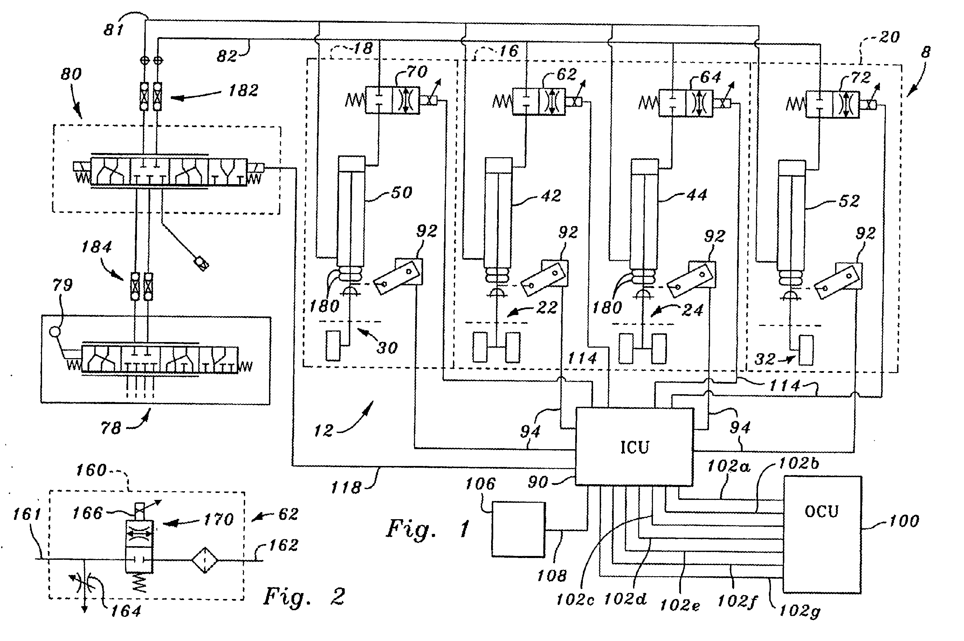

In der Figur 1 ist ein Arbeitsgerät insgesamt mit dem Bezugszeichen 8 gekennzeichnet, das mit (nicht gezeigten) Bodenbearbeitungswerkzeugen versehen ist, die von einem sich quer zur Fahrtrichtung erstreckenden Rahmen 12 gehaltert werden. Der Rahmen 12 umfasst einen Mittelrahmen oder -abschnitt 16 und Flügelabschnitte 18 und 20, die schwenkbar mit dem Mittelabschnitt 16 verbunden sind, um sie relativ zum Mittelabschnitt 16 um sich von vorn nach hinten erstreckende Achsen schwenken zu können. Erste und zweite Mittelabschnitthubeinrichtungen 22 und 24 sind mit dem Mittelabschnitt 16 verbunden. Die Flügelabschnitte 18 und 20 umfassen Flügelhubeinrichtungen 30 und 32. Eine Kupplungseinrichtung (nicht gezeigt) ist schwenkbar am vorderen Bereich des Mittelabschnitts 16 abgestützt, um eine Verbindung mit einem Traktor herzustellen, so dass das Arbeitsgerät 8 in Vorwärtsrichtung über ein Feld gezogen werden kann.

Einzelne elektrohydraulisch gesteuerte Zylinder 42 und 44 sind am Rahmen 12 im Abstand voneinander angebracht und mit den Hubradzusammenbauten 22 und 24 verbunden. Auf den Flügelabschnitten 18 und 20 angeordnete Zylinder 50 und 52 sind mit den Flügelhubeinrichtungen 30 und 32 verbunden. Wie in Figur 1 gezeigt, werden die Zylinder 42, 44, 50 und 52 durch separate elektrohydraulische Steuerventile 62, 64, 70 und 72 gesteuert. Die Steuerventile 62-72 sind als Zwei-Position/Vier-Wege-Proportionalventile dargestellt, die mit den Stirnkammern der Zylinder und über Auswahlsteuerventile 79 mit einer Hydraulikdruckquelle des Traktors 78 verbunden sind. Die Zylinder 42-52 sind durch eine Geräteventileinrichtung 80 über Hydraulikleitungen 81 und 82 daran angeschlossen. Die Geräteventileinrichtung 80 ist in Figur 1 als separates, hinzuzufügendes Ventil dargestellt, aber es sei angemerkt, dass sie auch ein Teil des Traktors sein kann, wie am Beispiel der kommerziell verfügbaren Traktoren der Serien John Deere 8000 und 9000 verdeutlicht wird.

Eine Gerätesteuereinheit 90 ist mit Rückkopplungspotentiometern oder ähnlichen Umsetzern 92 verbunden, die über Leitungen 94 Signale bereitstellen, die Zylinderkolbenhüben oder Positionen der Aufhängung entsprechen. Eine Bedienersteuereinheit 100 ist durch Steuerleitungen 102a-102g mit der Gerätesteuereinheit 90 verbunden. Ein im Abstand angeordnetes Paddel- oder Schiebepotentiometer 106 stellt über die Leitung 108 Hebe/Senk-Signale bereit. Bei Traktoren wie denen der Serien John Deere 8000 oder 9000 mit integrierter Geräteventileinrichtung 80 werden die benötigten Signale durch den Bus des Traktors übermittelt, bevor sie durch eine Anzeige interpretiert und der Gerätesteuereinheit 90 zugesandt werden, ohne Bedarf an einem Potentiometer 106. Die Bedienersteuereinheit 100 hat standardisierte bedienergesteuerte Eingaben und stellt die folgenden Ausgangswerte bereit (die in Figur 1 durch die Leitungen 102a bis 102g dargestellt werden), wobei die dargestellten Linien von den eingestellten Eingaben abhängen:
102(a) Zwischentiefe;
102(b) Tiefe;
102(c) Versatz des linken Flügels;
102(d) Versatz des rechten Flügels;
102(e) Nivellierung des Mittelabschnitts;
102(f) Deaktivierung des Versatzes; und
102(g) Stromquelle.

Die Gerätesteuereinheit 90 vergleicht die Spannung an der Leitung 94 für jede Hubeinrichtung 22, 24, 30, 32 mit einer gewünschten Signalspannung für die jeweilige Hubeinrichtung. Die Gerätesteuereinheit 90 vergleicht auch die Signalspannung für jede Hubeinrichtung mit den Signalspannungen der anderen Hubeinrichtungen, um die Maschine gleichmäßig anzuheben und abzusenken und jede gewünschte Nivellierungs- und Neigungsfunktion bereitzustellen.

Die Bedienersteuereinheit 100 umfasst eine Nivellierungsreferenzsteuerung und eine Nullreferenzsteuerung. Eine Tiefensteuerung und Zwischentiefensteuerung setzen die Arbeitstiefe in den Bodenbearbeitungspositionen fest. Eine Versatzsteuerung des rechten Flügels und eine Versatzsteuerung des linken Flügels erleichtern die Einstellung der Flügelrahmen 18 und 20 im Verhältnis zum Mittelabschnitt 16. Eine Hauptrahmennivellierungssteuerung stellt die Höhe der linken Seite des Mittelabschnitts 16 relativ zur rechten Seite des Mittelabschnitts 16 ein. Ein Aktivierungs-/Deaktivierungs-Schalter erleichtert das Rückstellen der Positionen. Die Bedienersteuereinheit 100 umfasst eine digitale Anzeige der ausgewählten Arbeitstiefe. Die Tiefensteuerungen können variable Widerstände mit drehbaren Knöpfen aufweisen, die mit Rasteinrichtungen für verschiedene Betriebsbedingungen versehen sind und ein komfortables Zurückkehren zu einer vorausgewählten Nivellierungseinstellung ermöglichen, nachdem die Versatzsteuereinrichtung benutzt wurde. Alternativ können Knöpfe oder Folienschalter verwendet werden, um ein anwachsendes Signal für die Versatzsteuereinrichtung bereitzustellen.

Die Zwischentiefensteuerung kann auf jede gewünschte Höhe zwischen der Arbeitstiefe und der vollständig angehobenen Position gesetzt werden. Die Zwischentiefensteuerung kann beispielsweise derart eingestellt werden, dass der Rahmen 12 in einer Position gehalten wird, in der die Bodenbearbeitungswerkzeuge nur leicht in den Boden eingreifen, wenn ohne tiefere Bodenbearbeitung Reifenspuren entfernt werden, oder wenn die Bodenbearbeitungswerkzeuge beim Umdrehen nicht vollständig aus dem Boden herausgehoben werden müssen. Die Zwischentiefensteuerung ist auch nützlich, wenn das Arbeitsgerät 8 über Bodenunregelmäßigkeiten wie Regeneinlässe oder Wasserläufe bewegt wird.

Die Steuerausgangsleitungen 114 von der Gerätesteuereinheit 90 setzen die elektrohydraulischen Ventile 62-72 selektiv unter Strom, um die Zylinder 42-50 zu betreiben und stellen die gewünschten Hub- und Tiefensteuerungsfunktionen bereit. Eine Steuerausgangsleitung 118 stellt eine automatische Steuerung der Geräteventileinrichtung 80 durch die Gerätesteuereinheit 90 bereit, um die Hydraulikleitung 82 unter Druck zu setzen, so dass die Inbetriebsetzung eines oder mehrerer der Ventile 62-72 dazu führt, dass der entsprechende Zylinder oder die entsprechenden Zylinder sich ausdehnen, wenn ein Anheben erforderlich ist. Die Leitung 82 wird mit einem Sumpf verbunden, wenn ein Absenken des Arbeitsgeräts 8 erforderlich ist. Alternativ können Vier-Position/Vier-Wege-Ventile verwendet werden, so dass die Richtungssteuerung direkt durch die Ventile 62-72 bereitgestellt wird, ohne dass eine Druckumkehr in den Leitungen 81 und 82 erforderlich wäre. Auch Zwei-Position/Zwei-Wege-Ventile können in dem System benutzt werden. Außerdem können die Proportionalventile durch Ventile des Ein/Ausschalttyps ersetzt werden.

Die Rückkopplungssignale der Leitungen 94 werden in der Gerätesteuereinheit 90 mit einem durch Betätigung von Knöpfen oder Drehung eines Hebels oder Knopfes an der Bedienersteuereinheit 100 erhaltenen Steuersignal verglichen. Abhängig von der Position des Zylinders in Bezug auf die vom Bediener ausgewählte Position stellt die Gerätesteuereinheit 90 dem elektrohydraulischen Ventil ein Ausgangssignal bereit, um einen proportionalen Betrag an Fluss für die gewünschte Position des Zylinders zu erreichen. Die Gerätesteuereinheit 90 vergleicht auch Rückkopplungssignale von den Umsetzern 92 und stellt die Ausgangsspannung an jedes der Ventile ein, so dass der Rahmen 12 gleichmäßig angehoben und abgesenkt werden kann. Bei Bedingungen, in denen eine unabhängige Einstellung unterschiedlicher Abschnitte des Rahmens 12 gewünscht ist, kann die Bedienersteuereinheit 100 derart eingestellt werden, dass sie die notwendigen unterschiedlichen Signale für jeden Abschnitt bereitstellt. Das Hubsystem ermöglicht eine gleichförmige Tiefensteuerung und ein nivelliertes Ausheben, sogar bei einander unähnlichen Zylindern mit unterschiedlichen Kapazitäten und Hublängen. Zusätzliche Radzusammenbauten können in Fahrtrichtung von den Mittelrahmenhubeinrichtungen 22 und 24 versetzt sein und von der Gerätesteuereinheit 90 und der Bedienersteuereinheit 100 gesteuert werden, um ein Nivellieren in Fahrtrichtung zu ermöglichen.

Die Hubeinrichtungen bewegen den Rahmen 12 zwischen einer angehobenen Transportposition, in der die Bodenbearbeitungswerkzeuge um einen wesentlichen Abstand vom Boden abgehoben sind, und einer abgesenkten Bodenbearbeitungsposition, in der die Bodenbearbeitungswerkzeuge in den Boden eindringen. In der Bodenbearbeitungsposition können die mit den Radzusammenbauten zusammenwirkenden Zylinder ausgedehnt oder eingezogen werden, um die Eindringtiefe der Bodenbearbeitungswerkzeuge zwischen einer oberflächlichen Streichposition und der niedrigstmöglichen, tiefen Bodenbearbeitungsposition verstellen zu können. Die mit den Radzusammenbauten zusammenwirkenden Zylinder können auf jede Position des Rahmens 12 eingestellt werden, um die Position der Flügelabschnitte 18, 20 relativ zur Position des Mittelabschnitts 16 zu verändern, und den Rahmen 12 zu nivellieren oder die Höhe der Abschnitte seitlich und in Fahrtrichtung zu ändern.

Die Gerätesteuereinheit 90 liest die analogen Eingaben von den Umsetzern 92 zur Steuerung der einzelnen Hubzylinder. Außerdem wird der zusätzlichen Geräteventileinrichtung 80 (oder direkt zum integrierten Auswahlsteuerventileinheit an Bord der neueren Traktoren) über die Leitung 118 von der Gerätesteuereinheit 90 ein Ventilsteuersignal bereitgestellt. Die Hydraulikdruckquelle des Traktors 78 umfasst ein normales, manuell betätigtes Auswahlsteuerventil 200. Bei neueren Traktoren wird die Hydraulikdruckquelle 78 von der Gerätesteuereinheit 90 und von konventionellen Einrichtungssteuerungen 200 und einem Standard-Geräteventileinrichtungshebel gesteuert, der in der Kabine des Traktors 78 angeordnet ist.

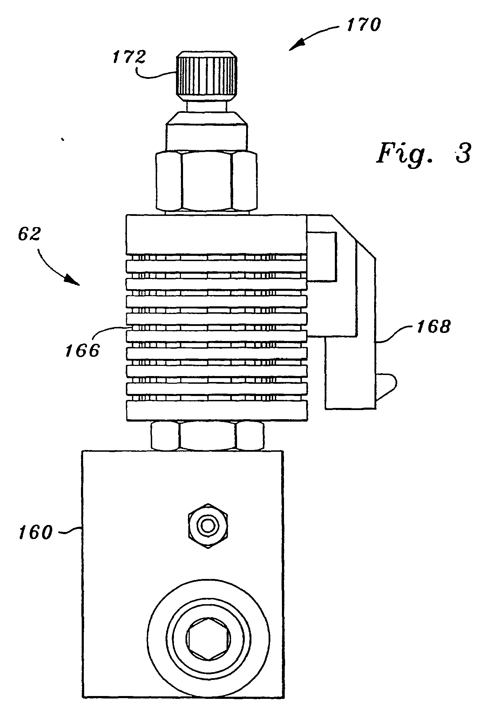

Die elektrohydraulischen Ventile 62-72 sind im wesentlichen identisch und daher wird nur das Ventil 62 detailliert beschrieben. Wie anhand der Figuren 2 und 3 erkennbar ist, umfasst das Ventil 62 einen Körper mit einem Eingangsanschluss 161 und einem Ausgangsanschluss 162, der mit der Stirnkammer des entsprechenden Zylinders verbunden ist. Eine Entlüftungsschraube 164 ist an der Ausgangsseite des Ventils 62 angeordnet. Eine Spule 166 mit einem Verbinder 168 steuert das Zwei-Position/Vier-Wege-Ventil, um die Stirnkammer des Zylinders mit der Leitung 82 zu verbinden und den Fluss durch das Ventil 62 einzustellen. Eine Ventilentriegelung 170 mit einem Knopf 172 ist am oberen Ende der Spule 166 angeordnet. Um das Ventil 62 in völlig geöffneter Position zu verriegeln, drückt der Bediener die Ventilentriegelung 170 nach unten und dreht dann den Knopf 172 um eine Viertel Drehung im Uhrzeigersinn. Alternativ kann jeder Typ einer mechanischen Entriegelungsanordnung, wie ein Hebel oder eine mit Gewinde ausgestattete Schraube, verwendet werden, um das Ventil 62 in der völlig geöffneten Position zu halten. Das Ventil 62 wird, gehalten durch die Ventilentriegelung 170, in der völlig geöffneten Position verbleiben, unabhängig von dem Signal an der Leitung 94. Um zum automatischen Betrieb zurückzukehren, dreht der Bediener einfach den Knopf 172 um eine Viertel Drehung im Gegenuhrzeigersinn und gibt den Knopf 172 frei, so dass sich die Spule 166 des Ventils 62 von der verriegelten Position in eine Position bewegen kann, die von dem Signal auf der Leitung 94 abhängt. Daher kann der Bediener alle Ventile 62-72 in der geöffneten Position arretieren und die Hub- und Absenkfunktionen direkt mit den Auswahlsteuerventilen 79 des Traktors 78 steuern, wenn ein elektrischer Fehler- auftritt. Ringelemente 180 für die Zylinderstäbe oder andere mechanische Anschläge an oder zusammenwirkend mit den Hubeinrichtungen ermöglichen eine Tiefensteuerung. Wenn die zusätzliche Geräteventileinrichtung 80 verwendet wird, wird die Steuerung umgangen, indem die Leitungen 81 und 82 von der Steuerung an den Verbindungsstellen 182 abgeklemmt und an Verbindungsstellen 184 am Ausgang des Auswahlsteuerventils 200 am Traktor 78 wieder angeschlossen werden. Identische Verbindungen sind an beiden Verbindungsstellen 182 und 184 bereitgestellt, um den Übergang zum und vom Umleitungs-Betriebsmodus zu erleichtern.

Nachdem der Bediener im Betrieb das Arbeitsgerät 8 an den Traktor 78 angebracht und die Hydraulikleitungen 81 und 82 zwischen dem Arbeitsgerät 8 und dem Traktor 78 angeschlossen hat, wird der Einrichtungsmodus des Auswahlsteuerventils 200 aktiviert und das Arbeitsgerät 8 auf eine ebene Oberfläche verbracht. Der Hebel des Auswahlsteuerventils 200 wird bewegt, um die Räder vom Boden abzuheben und dann wird der Hebel in die Schwebeposition verbracht, so dass die Radzusammenbauten die ebene Oberfläche berühren. Der Bediener drückt dann die Höhenreferenzsteuerung, um die Spannungsreferenzpegel der Umsetzer 92 feststellen, die der ebenen Bezugsposition entsprechen. Das Arbeitsgerät 8 wird dann angehoben und zum Feld gezogen, wo der Rahmen 12 abgesenkt wird, bis die Bodenbearbeitungswerkzeuge in Kontakt mit der Bodenoberfläche gelangen. Die Nullreferenzsteuerung wird niedergedrückt, um ein Null-Bezugsniveau für die jeweiligen Feldbedingungen festzusetzen. Der Bediener senkt dann das Arbeitsgerät 8 auf die gewünschte Arbeitstiefe ab und drückt einen Knopf, um die Arbeitstiefeneinstellung einzurichten. Alternativ könnte ein Knopf benutzt werden, den der Bediener dreht, bis die gewünschte Arbeitstiefe auf der digitalen Anzeige wiedergegeben wird. Anfangs wird der Versatz des linken Flügelrahmens 18 und der Versatz des rechten Flügelrahmens 20 und die Hauptrahmennivellierungssteuerung auf nivellierten Betrieb eingestellt. Der Hebel des Auswahlsteuerventils 200 wird aktiviert und die Hubradzusammenbauten 22, 24, 30, 32 des Arbeitsgeräts 8 senken den Rahmen 12 unter Steuerung der Gerätesteuereinheit 90 ab. Die Gerätesteuereinheit 90 empfängt die Spannungssignale von den Umsetzern 92 und steuert die einzelnen elektrohydraulischen Ventile 62-70, um die Zylinder zwecks Absenkung der Höhe des Rahmens 12 einzuziehen. Sobald das Arbeitsgerät 8 im Feld arbeitet, können die Flügelsteuerungen aus ihrer Rastposition heraus bewegt werden, um einen Flügelabschnitt 18 oder 20 zwecks besserer Nivellierung unabhängig vom Mittelabschnitt 16 anzuheben oder abzusenken. Wenn aus irgendeinem Grund eine Seite des Mittelabschnitts 16 auf einer anderen Höhe arbeitet als die gegenüberliegende Seite, kann die Nivellierungssteuerung betätigt werden, um eine Versatzspannung bereitzustellen, um die Position der Hubradzusammenbauten 22,30 relativ zu den Hubradzusammenbauten 24,32 in der Richtung zu ändern, in der die Abschnitte nivelliert sind.

Wenn eine Zwischentiefensteuerung gewünscht wird, beispielsweise während des Umdrehens oder wenn ein Wasserlauf durchfahren wird, aktiviert der Bediener einfach die Zwischentiefensteuerung. Es können auch mehrere Raststufen bereitgestellt werden, um unproblematisch einstellbare Arbeitstiefen für unterschiedliche Arbeitsbedingungen einzurichten.

Um das Arbeitsgerät 8 anzuheben, wählt der Bediener am Auswahlsteuerventil 200 die Anhebe-Funktion aus, und das Rückkopplungssystem stellt sicher, dass die Zylinder sich im wesentlichen im Einklang ausstrecken, um das Arbeitsgerät 8 in einer nivellierten Weise anzuheben. Die Versatzsteuerung stellt eine Rückstellung der Soll-Höhe und eine (manuelle) Übersteuerung für einen normalen Betrieb des Auswahlsteuerventils 200 ohne Tiefen- und Versatzsteuerung bereit.

Wenn in den Steuerungen, elektrohydraulischen Ventilen oder Kabelbäumen ein Fehler auftritt, kann der Bediener den Betrieb durch Verriegeln aller Ventile 62-72 in der geöffneten Stellung, Anbringen oder Aktivieren der mechanischen Anschläge 180 und durch Umgehen der zusätzlichen Geräteventileinrichtung 80, wenn sie benutzt wird, durch Abklemmen der Leitungen 81 und 82 von den Anschlüssen 182 und Anschließen der Leitungen 81 und 82 an den Anschlüssen 184 fortsetzen, um die Zylinder direkt vom Auswahlsteuerventil 79 des Traktors 78 zu steuern.

## Patentansprüche

1. Landwirtschaftliches Arbeitsgerät (8) mit einem Rahmen (12), an dem Bodenbearbeitungswerkzeuge anbringbar sind, und der eingerichtet ist, mittels eines Fahrzeugs über den Boden bewegt zu werden, wobei der Rahmen (12) durch wenigstens eine Hubeinrichtung (22, 24, 30, 32) abgestützt ist, um den Rahmen (12) relativ zum Boden anzuheben und abzusenken, und mit einem Höhensteuerungssystem, das einen mit der Hubeinrichtung (22, 24, 30, 32) verbundenen Hydraulikzylinder (42, 44, 50, 52), ein mit dem Hydraulikzylinder (42, 44, 50, 52) und einer Quelle unter Druck stehender Hydraulikflüssigkeit verbundenes Steuerventil (62, 64, 70, 72) und eine elektronische Steuereinheit (90) aufweist, die mit dem Steuerventil (62, 64, 70, 72) verbunden ist, um den Hydraulikzylinder (42, 44, 50, 52) derart zu betreiben, dass der Rahmen (12) eine vorbestimmte Position relativ zum Boden einnimmt, **dadurch gekennzeichnet, dass** das Steuerventil (62, 64, 70, 72) in seiner geöffneten Stellung manuell arretierbar ist, und dass der Hydraulikzylinder (42, 44, 50, 52) bei geöffnetem Steuerventil (62, 64, 70, 72) unabhängig von der elektronischen Steuereinheit (90) betreibbar ist.

2. Arbeitsgerät (8) nach Anspruch 1, **dadurch gekennzeichnet, dass** das Höhensteuerungssystem mindestens einen mit der elektronischen Steuereinheit (90) verbundenen Umsetzer (92) umfasst, der auf den Betrieb der Hubeinrichtung (22, 24, 30, 32) anspricht und Ausgangssignale erzeugt, die von der Position des Rahmens (12) relativ zum Boden abhängen.

3. Arbeitsgerät (8) nach Anspruch 2, **dadurch gekennzeichnet, dass** der Umsetzer (92) eine Spannung bereitstellt, die von der Ausdehnung des Hydraulikzylinders (42, 44, 52, 54) abhängt.

4. Arbeitsgerät (8) nach einem der Ansprüche 1 bis 3, **dadurch gekennzeichnet, dass** das Steuerventil (62, 64, 70, 72) ein elektrohydraulisches Ventil ist, das zwischen der Quelle und dem Hydraulikzylinder (42, 44, 50, 52) angeordnet ist, und dass die Umgehungseinrichtung eine manuelle Steuereinrichtung des elektrohydraulischen Ventils umfasst.

5. Arbeitsgerät (8) nach Anspruch 4, **dadurch gekennzeichnet, dass** die Umgehungseinrichtung eine Ventilentriegelung (170) mit einem manuell betätigten Element aufweist, um das Steuerventil (62, 64, 70, 72) in einer geöffneten Stellung zu verrasten.

6. Arbeitsgerät (8) nach einem der Ansprüche 4 oder 5, **dadurch gekennzeichnet, dass** das elektrohydraulische Ventil ein Proportionalventil ist, um einen Fluss der Hydraulikflüssigkeit bereitzustellen, der von den Ausgangssignalen des Umsetzers (92) abhängt.

7. Arbeitsgerät (8) nach einem der Ansprüche 1 bis 6, **dadurch gekennzeichnet, dass** ein Auswahlsteuerventil (200) zwischen der Quelle unter Druck stehender Hydraulikflüssigkeit und das Steuerventil (62, 64, 70, 72) geschaltet ist, und dass der Hydraulikzylinder (42, 44, 52, 54) bei aktivierter Umgehungseinrichtung unabhängig von der elektronischen Steuereinheit (90) durch das Auswahlsteuerventil (200) steuerbar ist, falls ein Fehler im Höhensteuerungssystem auftritt.

8. Arbeitsgerät (8) nach Anspruch 7, **dadurch gekennzeichnet, dass** zwischen die Quelle unter Druck stehender Hydraulikflüssigkeit und das Steuerventil (62, 64, 70, 72) eine Geräteventileinrichtung (80) geschaltet ist, und dass eine Verbindungseinrichtung vorgesehen ist, die eine Umgehung der Geräteventileinrichtung (80) ermöglicht, um den Hydraulikzylinder (42, 44, 52, 54) direkt durch das Auswahlsteuerventil (200) steuern zu können.

9. Arbeitsgerät (8) nach einem der Ansprüche 1 bis 8, **dadurch gekennzeichnet, dass** die Umgehungseinrichtung einer normale Betriebsposition hat, in der die Höhe des Rahmens (12) über dem Boden durch die elektronische Steuereinheit (90) selbsttätig steuerbar ist, und eine Umgehungsmodus-Betriebsposition, in der eine manuelle Einstellung der Hydraulikzylinder (42, 44, 52, 54) durch das Steuerventil (62, 64, 70, 72) erleichtert ist.

10. Arbeitsgerät nach Anspruch 9, **dadurch gekennzeichnet, dass** das Steuerventil (62, 64, 70, 72) durch eine Spule (166) gesteuert wird, und dass die Spule (116) oder ein von ihr bewegter Kern durch die Umgehungseinrichtung in der Umgehungsmodus-Betriebsposition arretierbar ist, in der das Steuerventil (62, 64, 70, 72) völlig geöffnet ist.

11. Arbeitsgerät nach einem der vorhergehenden Ansprüche, **dadurch gekennzeichnet, dass** am Rahmen (12) mehrere, voneinander beabstandete Hubeinrichtungen (22, 24, 30, 32) vorgesehen sind, denen jeweils ein Hydraulikzylinder (42, 44, 52, 54) zugeordnet ist, der mit einem Steuerventil (62, 64, 70, 72) verbunden ist.

## Claims

1. Agricultural implement (8), having a frame (12), on which there can mounted soil cultivation tools and which is equipped to be moved over the soil by means of a vehicle, the frame (12) being supported by at least one lifting device (22, 24, 30, 32) in order to raise and lower the frame (12) relative to the soil, and having a height control system which has a hydraulic cylinder (42, 44, 50, 52) which is connected to the lifting device (22, 24, 30, 32), a control valve (62, 64, 70, 72) which is connected to the hydraulic cylinder (42, 44, 50, 52) and to a source of hydraulic fluid under pressure, and an electronic control unit (90) which is connected to the control valve (62, 64, 70, 72) in order to operate the hydraulic cylinder (42, 44, 50, 52) in such a manner that the frame (12) adopts a predetermined position relative to the soil, **characterised in that** the control valve (62, 64, 70, 72) is manually lockable in its open position, and **in that** the hydraulic cylinder (42, 44, 50, 52) can be operated, when the control valve (62, 64, 70, 72) is open, independently of the electronic control unit (90).

2. Implement (8) according to claim 1, **characterised in that** the height control system comprises at least one converter (92) which is connected to the electronic control unit (90), said converter responding to operation of the lifting device (22, 24, 30, 32) and generating output signals which are dependent upon the position of the frame (12) relative to the soil.

3. Implement (8) according to claim 2, **characterised in that** the converter (92) provides a voltage which is dependent upon the extension of the hydraulic cylinder (42, 44, 52, 54).

4. Implement (8) according to one of the claims 1 to 3, **characterised in that** the control valve (62, 64, 70, 72) is an electrohydraulic valve which is disposed between the source and the hydraulic cylinder (42, 44, 50, 52) and **in that** the bypass device comprises a manual control device of the electrohydraulic valve.

5. Implement (8) according to claim 4, **characterised in that** the bypass device has a valve unlocker (170) with a manually actuated element in order to lock the control valve (62, 64, 70, 72) in an open position.

6. Implement (8) according to one of the claims 4 or 5, **characterised in that** the electrohydraulic valve is a proportional valve in order to provide a flow of the hydraulic fluid which is dependent upon the output signals of the converter (92).

7. Implement (8) according to one of the claims 1 to 6, **characterised in that** a selection control valve (200) is connected between the source of hydraulic fluid under pressure and the control valve (62, 64, 70, 72) and **in that** the hydraulic cylinder (42, 44, 52, 54) can be controlled, when the bypass is activated, independently of the electronic control unit (90) by means of the selection control valve (200) if a fault occurs in the height control system.

8. Implement (8) according to claim 7, **characterised in that** an implement valve device (80) is connected between the source of hydraulic fluid under pressure and the control valve (62, 64, 70, 72) and **in that** a connection device is provided which makes it possible to bypass the implement valve device (80) in order to be able to control the hydraulic cylinder (42, 44, 52, 54) directly by means of the selection control valve (200).

9. Implement (8) according to one of the claims 1 to 8, **characterised in that** the bypass device has a normal operating position in which the height of the frame (12) above the soil can be controlled automatically by means of the electronic control unit (90) and a bypass mode operating position, in which a manual adjustment of the hydraulic cylinder (42, 44, 52, 54) is facilitated by means of the control valve (62, 64, 70, 72).

10. Implement according to claim 9, **characterised in that** the control valve (62, 64, 70, 72) is controlled by means of a coil (166) and **in that** the coil (116) or a core moved by it can be locked by means of the bypass device in the bypass mode operating position, in which the control valve (62, 64, 70, 72) is completely open.

11. Implement according to one of the preceding claims, **characterised in that** a plurality of lifting devices (22, 24, 30, 32), which are at a spacing from each other, is provided on the frame (12), to which lifting devices there is assigned one hydraulic cylinder (42, 44, 52, 54) respectively which is connected to a control valve (62, 64, 70, 72).

## Revendications

1. Organe de travail (8) à usage agricole, comportant un châssis (12), auquel peuvent être fixés des outils de traitement du sol et qui est conçu pour se déplacer sur le sol au moyen d'un véhicule, le châssis (12) étant supporté par au moins un dispositif de levage (22, 24, 30, 32) destiné à lever et abaisser le châssis (12) par rapport au sol, et comportant un système de réglage de la hauteur, qui comporte un vérin hydraulique (42, 44, 50, 52) relié au dispositif de levage (22, 24, 30, 32), une soupape de commande (62, 64, 70, 72), qui est reliée au vérin hydraulique (42, 44, 50, 52) et à une source de liquide hydraulique sous pression, et une unité de commande électronique (90), qui est reliée à la soupape de commande (62, 64, 70, 72) en vue de manoeuvrer le vérin hydraulique (42, 44, 50, 52) de telle sorte que le châssis (12) est amené dans une position prédéfinie par rapport au sol, **caractérisé en ce que** la soupape de commande (62, 64, 70, 72) peut être immobilisée manuellement dans sa position ouverte et **en ce que** le vérin hydraulique (42, 44, 50, 52) peut être manoeuvré indépendamment de l'unité de commande électronique (90) lorsque la soupape de commande (62, 64, 70, 72) est ouverte.

2. Organe de travail (8) selon la revendication 1, **caractérisé en ce que** le système de réglage de la hauteur comporte au moins un transpondeur (92), qui est relié à l'unité de commande électronique (90) et qui réagit à la manoeuvre du dispositif de levage (22, 24, 30, 32) et génère des signaux de sortie qui dépendent de la position du châssis (12) par rapport au sol.

3. Organe de travail (8) selon la revendication 2, **caractérisé en ce que** le transpondeur (92) délivre une tension qui dépend de l'extension du vérin hydraulique (42, 44, 50, 52).

4. Organe de travail (8) selon l'une quelconque des revendications 1 à 3, **caractérisé en ce que** la soupape de commande (62, 64, 70, 72) est un distributeur électro-hydraulique, qui est agencé entre la source et le vérin hydraulique (42, 44, 50, 52), et **en ce que** le système de by-pass comporte un dispositif de commande manuelle du distributeur électro-hydraulique.

5. Organe de travail (8) selon la revendication 4, **caractérisé en ce que** le système de by-pass comporte un organe de déblocage de soupape (170) avec un élément à actionnement manuel, afin d'immobiliser la soupape de commande (62, 64, 70, 72) dans une position ouverte.

6. Organe de travail (8) selon la revendication 4 ou 5, **caractérisé en ce que** le distributeur électro-hydraulique est un distributeur à action proportionnelle afin de mettre à disposition un flux de liquide hydraulique qui dépend des signaux de sortie du transpondeur (92).

7. Organe de travail (8) selon l'une quelconque des revendications 1 à 6, **caractérisé en ce qu'**une soupape de commande sélective (200) est montée entre la source de liquide hydraulique sous pression et la soupape de commande (62, 64, 70, 72), et **en ce que** le vérin hydraulique (42, 44, 50, 52), lorsque le système de by-pass est activé, peut être commandé par l'unité de commande électronique (90) par l'intermédiaire de la soupape de commande sélective (200) chaque fois qu'une erreur se produit dans le système de réglage de la hauteur.

8. Organe de travail (8) selon la revendication 7, **caractérisé en ce qu'**un dispositif de soupapes (80) pour l'organe de travail est monté entre la source de liquide hydraulique sous pression et la soupape de commande (62, 64, 70, 72), et **en ce qu'**il est prévu un dispositif de liaison qui permet de contourner le dispositif de soupapes (80) pour l'organe de travail afin de pouvoir commander le vérin hydraulique (42, 44, 50, 52) directement par la soupape de commande sélective (200).

9. Organe de travail (8) selon l'une quelconque des revendications 1 à 8, **caractérisé en ce que** le système de by-pass a une position de fonctionnement normale, dans laquelle la hauteur du châssis (12) au-dessus du sol peut être réglée automatiquement par l'unité de commande électronique (90), et une position de fonctionnement en mode by-pass, dans laquelle une activation manuelle du vérin hydraulique (42, 44, 50, 52) par la soupape de commande (62, 64, 70, 72) est facilitée.

10. Organe de travail (8) selon la revendication 9, **caractérisé en ce que** la soupape de commande (62, 64, 70, 72) est commandée par une bobine (166) et **en ce que** la bobine (166) ou un noyau déplacé par celle-ci peuvent être immobilisés par le système de by-pass en position de fonctionnement en mode by-pass, dans laquelle la soupape de commande (62, 64, 70, 72) est complètement ouverte.

11. Organe de travail (8) selon l'une quelconque des revendications précédentes, **caractérisé en ce qu'**il est prévu de monter sur le châssis (12) plusieurs dispositifs de levage (22, 24, 30, 32) écartés les uns des autres, à chacun desquels est associé un vérin hydraulique (42, 44, 50, 52) qui est relié à une soupape de commande (62, 64, 70, 72).
